(19) Europäisches Patentamt
European Patent Office
Office européen des brevets

(11) **EP 2 631 670 B1**

(12) **FASCICULE DE BREVET EUROPEEN**

(45) Date de publication et mention
de la délivrance du brevet:
**21.12.2016 Bulletin 2016/51**

(51) Int Cl.:
*G01S 13/28* (2006.01)    *G01S 7/285* (2006.01)
*G01S 7/292* (2006.01)    *G01S 13/10* (2006.01)
*G01S 7/36* (2006.01)    *G01S 13/06* (2006.01)

(21) Numéro de dépôt: **13156440.3**

(22) Date de dépôt: **22.02.2013**

(54) **Système et procédé de localisation radar.**

System und Verfahren zur Radarlokalisierung

System and method of radar location.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.02.2012 FR 1200547**

(43) Date de publication de la demande:
**28.08.2013 Bulletin 2013/35**

(73) Titulaire: **Thales**
**92400 Courbevoie (FR)**

(72) Inventeurs:
• **Kemkemian, Stéphane**
**75014 Paris (FR)**

• **Artis, Jean-Paul**
**29280 Plouzane (FR)**
• **Quellec, Jean-Michel**
**29810 Ploumoguer (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**WO-A1-2011/106881    FR-A1- 2 146 105**
**US-A1- 2011 037 643    US-B1- 6 760 363**

EP 2 631 670 B1

**Description**

La présente invention concerne un système de localisation radar, utilisant un émetteur et un récepteur de signaux radars et permettant par réflexion des ondes émises sur les objets de détecter et de localiser ces objets. Elle s'applique dans le domaine de la détection et de la localisation d'objets en particulier dans le cas où la localisation d'objets proches du système est nécessaire.

Dans le cas d'un système radar utilisant un système d'émission à « état solide », (un émetteur à « état solide » utilise des dispositifs en particulier des transistors dans lequel le courant circule dans des matériaux semi-conducteurs qui sont solides par opposition à un émetteur à tube à vide où le courant est constitué d'un faisceau d'électron confiné qui est constitué d'un « gaz » d'électron) les signaux radar utilisent généralement une succession d'impulsions de durée T1. De plus ils doivent présenter un ratio entre la puissance moyenne émise et la puissance maximale émise le plus élevé possible, ainsi il est nécessaire d'avoir des impulsions longues. En effet, le coût des systèmes d'émission à état solide dépend principalement de la puissance maximale, mais la portée du radar dépend par contre principalement de la puissance moyenne.

L'un des inconvénients lié à l'utilisation d'impulsions longues, dans le cas classique des radars monostatiques, est la présence de zones dans lequel le radar ne peut pas localiser d'objets. En effet, au-delà d'une dizaine de Watts de puissance émise, il est impossible d'émettre et de recevoir simultanément, sauf à utiliser deux antennes séparées, ce qui est coûteux et généralement très difficile à faire pour des systèmes aéroportés contraints par la taille. Il ne sera donc pas possible de recevoir un signal réfléchi durant l'émission du signal émis. Par exemple, si l'objet provoquant la réflexion est proche, le signal réfléchi arrive trop tôt (le radar est toujours en train d'émettre) et la réception de ce signal réfléchi sera impossible. Une autre zone dans laquelle le radar ne peut pas localiser d'objet est située à l'extrémité de la zone de localisation. En effet, dans ce cas une impulsion réfléchie va revenir à l'émetteur en même temps que la prochaine impulsion émise. La zone dans laquelle le radar ne peut pas localiser d'objet la plus gênante est celle qui est située à courte distance. En effet, la zone masquée située en fin de domaine n'est pas très gênante car il suffit d'augmenter la période de répétition des impulsions (PRI) si on souhaite observer des impulsions réfléchies dans ce domaine de distance.

Pour des impulsions de durée T1, si le facteur de forme du radar est h = T1/PRI, alors le domaine spatial non utilisable (zone géographique dans lequel le radar n'est pas capable de localiser un objet) est la zone située à une distance inférieure à la distance parcourue par une impulsion durant le temps T1.

Il est connu des systèmes utilisant des impulsions émises qui ne sont pas modulées, et dans ce cas, il est possible d'utiliser partiellement la fraction de l'impulsion reçue qui ne se trouve pas dans la coupure de réception provoquée par l'émission de ladite impulsion. Ainsi il est possible en utilisant ces systèmes d'utiliser la totalité du domaine en distance. En revanche, la sensibilité est réduite dans les zones incomplètes. Cette sensibilité est d'autant plus limitée lorsque le masquage devient plus important.

Afin d'améliorer la résolution du système de localisation il est connu d'utiliser un signal radar constitué d'impulsions contenant un code particulier de manière à accroître la bande d'étalement des fréquences B du signal émis pour une durée d'impulsion donnée. Si la compression provoquée par le code particulier est idéale, l'énergie de l'implusion initiale de durée $T_1$ est conservée mais est concentrée dans une durée beaucoup plus petite $t_1 = 1/B$. La puissance de l'impulsion comprimée est donc accrue dans le rapport $\dfrac{T_1}{t_1} = BT_1$.

Or dans le cas d'utilisation de certaines impulsions codées, par exemple utilisant les codes de Barker, les méthodes de détection standards, appliquées à une fraction de l'impulsion reçue, provoquent une détection dégradée et une précision dégradée, car le code est incomplet. Cette dégradation peut se traduire, par exemple, par des pics de corrélation multiples conduisant à des ambiguïtés de position ou à une forte baisse de la puissance des impulsions et donc à une perte d'efficacité du radar.

Il est également connu des systèmes, utilisant des impulsions contenant un code dont la période de répétition des impulsions est réduite d'un facteur N par rapport au signal initial. La durée d'impulsion est réduite du même facteur N, ce qui divise également par N la longueur de la zone dans laquelle le radar ne peut pas localiser d'objet. Cependant avec uniquement ces modifications, le système et le signal deviennent inopérant car elle devient ambiguë en distance dans une zone ou le signal initial n'était pas ambigu en distance.

Il est connu pour limiter cette ambiguïté, une solution qui est d'émettre une succession de N impulsions de fréquences différentes. L'espacement en fréquence de ces N impulsions doit être tel que la fonction d'intercorrélation entre ces impulsions soit suffisamment basse pour qu'on puisse dire sans ambigüité de quelle impulsion provient un écho. Dans la plus simple des réalisations connues, la réception est à bande étroite, c'est-à-dire que la largeur de bande du récepteur est adaptée à la bande d'une impulsion. On décale simplement la fréquence centrale de réception pour recevoir les échos provenant des différentes fréquences. L'inconvénient de cette méthode simple est, qu'à un instant donné, on ne peut recevoir que 1/N du domaine instrumenté. Il faut successivement recentrer le récepteur sur les N fréquences pour recevoir l'ensemble du domaine instrumenté. Ceci se traduit :

- Soit par un rallongement du temps nécessaire à la veille de tout le domaine en distance, si on reste à temps d'observation constant pour une fréquence donnée ;

- Soit par une réduction du temps d'observation d'une pseudo-ambiguïté donnée si on veut conserver un temps observation du la totalité du domaine en distance constant (ceci se traduit par une perte de sensibilité).

Dans une réalisation plus avancée, la réception est à bande large, c'est-à-dire que la largeur de bande du récepteur couvre la totalité du spectre correspondant aux N fréquences. Les signaux reçus dans les N fréquences sont reçus simultanément et affectés à la bonne fréquence grâce à un filtrage en fréquence adéquat (analogique ou numérique).

Cette dernière réalisation permet de contrer le problème de la zone dans laquelle le radar ne peut pas localiser d'objet, cette zone étant importante à courte distance. En revanche, elle crée un nouveau problème qui est l'apparition de N-2 zones dans laquelle le radar ne peut pas localiser d'objet, dans la partie centrale du domaine en distance. Pour résoudre ce problème, il faut émettre, sur plusieurs séquences d'observation, un signal dont on fait légèrement varier la PRI de séquence à séquence de manière à déplacer la zone centrale aveugle. Cependant cette solution ne permet pas des performances optimales dans la zone centrale.

La demande de brevet référence FR 2 146 105 présente un procédé de détection électromagnétique à corrélation et un système de détection utilisant ce procédé.

L'objet de la présente invention est donc un système de localisation radar permettant une localisation précise à courte distance et ne présentant pas les inconvénients des systèmes connus dans l'état de la technique.

Ainsi il est proposé suivant un aspect de l'invention un système de localisation radar comprenant des moyens 101 d'émission de signal radar, ledit signal comprenant au moins une impulsion émise, une impulsion émise ayant une durée T1 et un indice i associé et débutant à un instant T2(i). De plus ladite impulsion étant modulées par au moins un code conservant de bonnes propriétés d'autocorrélation lorsqu'une fraction dudit code est utilisée. Le système comporte aussi des moyens 102 de réception de signaux radar réfléchis, des moyens 103 de détermination d'une corrélation entre une reconstruction d'une impulsion émise et le signal radar reçu durant l'intervalle temporel débutant à T2(i)+2*T1 et finissant à T2(i+1). Ledit système étant caractérisé en ce que lesdits moyens de détermination d'une corrélation sont en outre adapté pour reconstruire un ensemble, d'au moins une impulsion tronquée j, une impulsion tronquée j étant de durée T3(j), inférieure à la durée de l'impulsion émise T1 et correspondant à la partie finale de ladite impulsion émise, lesdites impulsions tronquées étant de durées respectives croissantes, déterminer au moins un premier signal corrélé j par corrélation de ladite impulsion tronquée j et du signal reçu durant l'intervalle temporel débutant à T2(i)+T1 et finissant à T2(i)+T1+T3(j) déterminer un deuxième signal, à partir de tout ou partie des premiers signaux corrélés j, par la recopie de l'intervalle temporel, dudit signal corrélé j, débutant à T2(i)+T1+T3(j-1) et finissant à T2(i)+T1+T3(j), sur l'intervalle temporel, dudit deuxième signal, débutant à T2(i)+T1+T3(j-1) et finissant à T2(i)+T1+T3(j).

En d'autre terme le deuxième signal est obtenu par la recopie de différentes parties des premier signaux. Ce deuxième signal est un signal pour lequel les différentes pics représente les différents objets, ayant réfléchis l'onde radar et qui sont localisés dans l'environnement du radar.

Ce système permet donc de localiser un objet situé très proche, en effet il permet de faire la localisation même si une partie de l'impulsion réfléchie arrive au récepteur durant l'émission de cette dite impulsion.

Selon un mode de réalisation lesdits moyens 103 de détermination d'une corrélation sont en outre adaptés pour la multiplication des échantillons temporels desdites impulsions tronquées, par un coefficient de pondération respectif appartenant à une fenêtre de pondération.

Cette caractéristique technique permet d'améliorer la précision de la localisation.

Selon un mode de réalisation lesdits moyens de détermination d'une corrélation sont en outre adaptés, à partir d'une impulsion reconstruite j, pour calculer un premier vecteur correspondant à la transformée de fourrier discrète du signal reçu sur l'intervalle allant de T2(i)+T1 à T2(i)+T1+T3(j), déterminer un deuxième vecteur correspondant à la transformée de fourrier discrète de la retournée temporelle de la conjuguée complexe de l'impulsion reconstruite j et calculer ledit premier signal corrélé j par transformée de Fourier discrète inverse de la multiplication terme à terme du premier et du deuxième vecteur.

Cette caractéristique technique permet de réduire les besoins en ressource de calcule des modules et dispositifs utilisés par le système.

Selon un mode de réalisation lesdits moyens 101 d'émission sont en outre adaptés pour l'émission de signaux radar comprenant au moins une impulsion modulée en utilisant une rampe de fréquence linéaire ou non linéaire et ledit module de réception est adapté pour la réception de signaux radar comportant lesdites impulsions modulées en utilisant une rampe de fréquence linéaire ou non linéaire.

Selon un mode de réalisation lesdits moyens 103 de détermination d'une corrélation sont en outre adapté, à partir d'une impulsion reconstruite j, pour filtrer les échantillons dudit deuxième signal, sur un intervalle débutant à T2(i)+T1+T3(j) et finissant à T2(i)+T1+T3(j+1) afin qu'un échantillon dudit intervalle soit égale à la moyenne pondérée des échantillons voisins dudit échantillon.

Par exemple, si dans une des zones, la résolution est *k* fois plus élevée que nécessaire, on va calculer de manière glissante ou non :

$$Y_i = \frac{1}{\beta} f^{-1} \left( \sum_{u=-U}^{U} f(a_u X_{i+u}) \right).$$ Dans cette équation *f* est une fonction monotone et les coefficients $a_u$ sont choisis pour obtenir la réponse impulsionnelle recherchée. Il est possible par exemple d'utiliser $a = 1$, $U = k/2$, $f(x) = x^2$ et $\beta = 1$.

Ces deux caractéristiques techniques permettent d'améliorer la précision de la localisation.

Selon un mode de réalisation lesdits moyens 101 d'émission sont adaptés pour utiliser un ensemble de fréquences différentes pour l'émission desdites impulsions desdits signaux radar et lesdits moyens 102 de réception sont adaptés pour recevoir lesdites impulsions desdits signaux radar réfléchis sur lesdites fréquences différentes.

Selon un mode de réalisation le système comprend en outre des moyens de détermination d'un troisième signal de synchronisation, pour une impulsion émise i utilisant une fréquence, par l'addition terme à terme, pour tout ou partie des impulsions émises j utilisant la même fréquence, des échantillons de l'intervalle dudit signal radar réfléchi débutant à T2(j)+T1 et finissant à T2(j)+2*T1, ladite addition étant stockée dans l'intervalle temporel, dudit troisième signal, débutant à T2(i)+T1 et finissant à T2(i)+2*T1. De plus lesdits moyens 103 de détermination d'une corrélation sont en outre adaptés pour la corrélation entre la reconstruction d'une impulsion émise et l'intervalle temporel, dudit troisième signal, débutant à T2(i)+2*T1 et finissant à T2(i+1)

Selon un mode de réalisation le procédé de localisation radar utilise le système présenté dans l'invention et comporte les étapes suivantes : une étape 401 de détection d'une éventuelle source de brouillage, une étape 402, dans le cas de non détection d'une source de brouillage, d'émission et de réception d'un signal radar pour lequel les impulsions faisant partie d'un même groupe d'impulsions successives utilisent une fréquences d'émission identique, la fréquence d'émission variant d'un groupe au suivant et une étape 403, dans le cas de détection d'une source de brouillage, d'émission et de réception d'un signal radar utilisant des fréquences différentes pour deux impulsions successives, les fréquences suivant une loi de répartition périodique ou non périodique.

Ces trois caractéristiques techniques permettent d'améliorer la précision de la localisation, grâce à la diversité de fréquence, apportée par l'utilisation de fréquences différentes.

L'invention sera mieux comprise et d'autres avantages apparaîtront à la lecture de la description détaillée et à l'aide des figures parmi lesquelles :

    La figure 1 présente un premier mode de réalisation du système de localisation suivant un aspect de l'invention

    La figure 2 présente le fonctionnement de dispositif de concaténation des signaux corrélés suivant un aspect de l'invention

    La figure 3 présente le fonctionnement du dispositif de concaténation

    La figure 4 présente le dispositif de choix de la disposition des fréquences

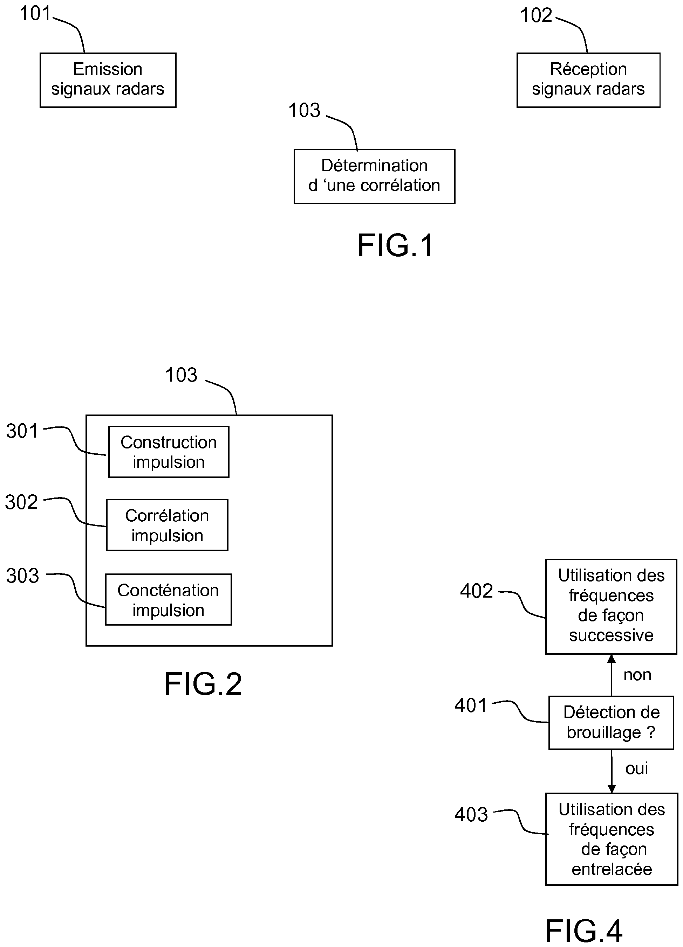

Le système tel que présenté figure 1 suivant un aspect de l'invention, comporte un module d'émission 101 de signaux radars, un module 102 de réception de signaux radars et un module 103 de détermination d'une corrélation à partir des signaux radars reçus. Le module d'émission 101 utilise des signaux radars constitués d'une succession d'impulsions modulées par certains codes particuliers. Ces codes doivent être tels qu'ils conservent de bonnes propriétés d'autocorrélation, même si une fraction du code est utilisée. A titre d'exemple, cette propriété est vérifiée par:

- Des impulsions modulées en utilisant une rampe de fréquence linéaire ou non linéaire connu également sous le terme anglais de chirps. En effet ces impulsions, même si elles sont tronquées, restent de même type;
- Des codes à bruit, en effet une fraction de séquence pseudo-aléatoire reste une séquence pseudo-aléatoire.

En revanche, la propriété n'est pas vérifiée sur des codes de Barker. En effet un code de Barker tronqué n'est plus un code de Barker.

Les impulsions émises sont de taille identique T1 et une impulsion commence à l'instant T2(i). Le module 103 de détermination d'une corrélation utilise deux types de traitement, en fonction de l'intervalle temporel de réception considéré:

- Dans l'intervalle temporel débutant à T2(i)+2*T1 et finissant à T2(i+1), l'impulsion réfléchie est reçue complètement et elle n'est pas masquée par l'émission de la propre impulsion ou de l'impulsion suivante;
- Dans l'intervalle temporel débutant à T2(i)+T1 et finissant à T2(i)+2*T1, une partie de l'impulsion réfléchie est masquée par l'émission de la propre impulsion

Dans l'intervalle temporel débutant à T2(i)+2*T1 et finissant à T2(i+1), un traitement de corrélation avec une impulsion reconstituée est employé (ce traitement est aussi connu sous le nom de compression d'impulsion). La corrélation peut aussi être réalisée par l'utilisation d'une transformée de Fourier discrète.

La méthode par transformée de Fourrier discrète est réalisée ainsi:

- Calcul d'une transformée de Fourier du signal reçu dans l'intervalle temporel débutant à T2(i)+2*T1 et finissant à T2(i+1), cet intervalle temporel comportant NFFT échantillons.
- Calcul de la retournée temporelle du conjugué complexe d'une reconstruction de l'impulsion émise (t → -t).
- Calcule sur le même nombre d'échantillons (NFFT) de la transformée de Fourier discrète de l'impulsion reconstruite retournée et conjuguée.
- Calcul de la multiplication échantillon par échantillon des deux vecteurs.
- Calcul de la transformée de Fourier discrète inverse du produit, afin d'obtenir un signal dans le domaine temporel.

Ceci correspond donc à la corrélation du signal reçu par la reconstruction de l'impulsion émise retournée temporellement, c'est-à-dire à calculer l'intercorrélation du signal reçu par le conjugué complexe de la reconstruction de l'impulsion émise.

La méthode par corrélation utilise un filtre adapté classique. Cette méthode est toutefois plus lourde en calcul que la méthode par transformée de Fourier discrète pour des compressions de «*BT*» important. L'acronyme *« BT »* désigne usuellement le produit de la bande d'étalement en fréquence de l'impulsion codée B par la longueur de l'impulsion initiale T. Si la compression provoquée par le code particulier est idéale, l'énergie de l'implusion initiale de durée $T_1$ est conservée mais est concentrée dans une durée beaucoup plus petite $t_1 = 1/B$. La puissance de l'impulsion comprimée est donc accrue dans le rapport $\frac{T_1}{t_1} = BT_1$. C'est pour ceci que la méthode par transformée de Fourier discrète est préférée à la méthode par corrélation.

Dans l'intervalle temporel débutant à T2(i)+T1 et finissant à T2(i)+2*T1, le traitement est réalisé pour différents instants temporels T2(i)+T1+T3(j) appartenant à l'intervalle temporel débutant à T2(i)+T1 et finissant à T2(i)+2*T1. Le module de détermination d'une corrélation suivant ce mode de réalisation est présenté figure 2 et comprend les dispositifs suivants. Un dispositif 301 de reconstruction d'une impulsion permet d'obtenir une impulsion correspondant à la partie finale de l'impulsion initiale et de durée T3(j). Un dispositif 302 de corrélation de impulsion reconstruite j avec le signal radar reçu sur l'intervalle temporel débutant à T2(i)+T1+T3(j-1) (avec T3(0) valant 0) et finissant à T2(i)+T1 +T3(j) est présent. Enfin le dernier dispositif est le dispositif 303 de concaténation des signaux corrélés dans un même signal.

On postule ainsi, pour chaque impulsion reconstruite j, qu'une impulsion réfléchie aura son pic de corrélation maximal au retard T3(j), et ainsi qu'il est possible de connaitre a priori quelle est l'impulsion reconstruite qui va maximaliser le rapport signal sur bruit sur cette éventuelle impulsion réfléchie. Cette démarche permet de s'assurer qu'en tout point de la zone la corrélation donne un pic de corrélation de rapport signal sur bruit optimal.

Afin de simplifier les différents calculs il est possible de n'utiliser qu'un nombre limité, N, d'impulsions reconstruites. Ce mode de réalisation ayant l'inconvénient de ne pas avoir une réplique reconstruite parfaitement adaptée à chacun des échantillons du signal reçu. Il est aussi possible d'utiliser un traitement par transformée de Fourier discrète.

Dans ce mode de réalisation le dispositif 301 de reconstruction d'une impulsion est adapté pour calculer et mémoriser, N impulsions reconstruites correspondant à la partie finale de l'impulsion émise et ayant des tailles différentes. Les échantillons de ces N impulsions reconstruites peuvent être chacun pondérés par une loi individuelle pour abaisser le niveau de lobes secondaires. Une transformation de Fourier discrète est ensuite appliquée sur ces N impulsions reconstruites. Ces impulsions reconstruites peuvent être calculées au moment du traitement ou bien avant le traitement et stockées dans une mémoire. Dans le cas où 6 impulsions sont reconstruites il est possible de reconstruire par exemple les impulsions suivantes :

- La première impulsion reconstruite correspondant au 15 dernier pour cent de l'impulsion émise
- La deuxième impulsion reconstruite correspondant au 30 dernier pour cent de l'impulsion émise
- La troisième impulsion reconstruite correspondant au 45 dernier pour cent de l'impulsion émise
- La quatrième impulsion reconstruite correspondant au 60 dernier pour cent de l'impulsion émise
- La cinquième impulsion reconstruite correspondant au 75 dernier pour cent de l'impulsion émise
- La sixième impulsion reconstruite correspondant à l'intégralité de l'impulsion émise

Le dispositif 302 de corrélation est adapté pour:

- Calculer la transformée de Fourier discrète du signal reçu.
- Multiplier terme à terme, la transformée de Fourier discrète du signal reçu et les N impulsions reconstruites.
- Calculer la transformée de Fourier discrète inverse des N multiplications terme à terme.

Toutes ces corrélations sont normalisées à bruit constant, c'est-à-dire que le plancher de bruit après corrélation est le même pour toutes les longueurs des impulsions reconstruites utilisées. Ceci est réalisé en supposant que le bruit reçu est de puissance constante en fonction du temps et que l'échantillonnage est adapté à la bande passante du récepteur. Dans ces conditions, le bruit des échantillons successifs a une autocorrélation nulle en dehors d'un retard τ = 0. Si la réplique utilise n échantillons, le bruit est donc multiplié en puissance par n (sommation quadratique de l'ensemble des échantillons de bruit). Le signal complexe est donc normalisé par $\alpha/\sqrt{n}$ où $\alpha$ est un gain arbitraire et constant pour toutes les compressions.

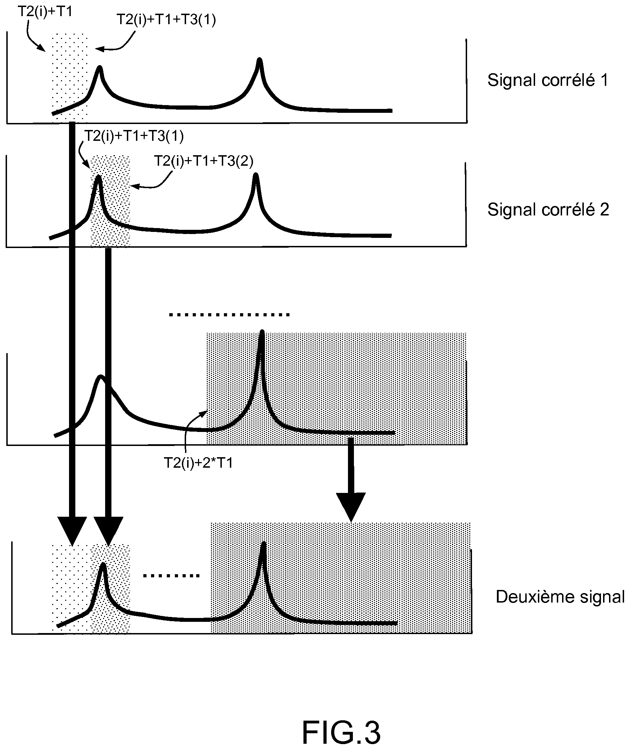

Enfin le dispositif de concaténation 303 est adapté en outre pour permettre de sélectionner, dans chacun des N signaux corrélés par N impulsions reconstruites, la zone utile de cette corrélation et de construire un deuxième signal par la recopie des échantillons de l'intervalle temporel, du signal corrélé j, débutant à T2(i)+T1 +T3(j-1) et finissant à T2(i)+T1 +T3(j), sur l'intervalle temporel, du deuxième signal, débutant à T2(i)+T1+T3(j-1) et finissant à T2(i)+T1+T3(j). De même les échantillons du signal corrélé de l'intervalle débutant à T2(i)+2*T1 et finissant à T2(i+1) sont recopiés sur l'intervalle temporel, du deuxième signal, débutant à T2(i)+T1+T3(j-1) et finissant à T2(i)+T1+T3(j). La figure 3 présente un mode de fonctionnement du dispositif 303. La partie utile du signal corrélé 1 commence à T2(i)+T1 et finit à T2(i)+T1+T3(1), en effet T3(0)=0. La partie utile du signal corrélé 2 commence à T2(i)+T1 et finit à T2(i)+T1+T3(1), en effet T3(0)=0. Ces deux parties sont ensuite recopiées sur le deuxième signal.

Dans un mode de réalisation les impulsions modulées en utilisant une rampe de fréquence non linéaire (également connues sous le terme de chirp non linéaires ou chirp en « S ») sont utilisés. L'avantage de ce type d'impulsion est de présenter, dans la zone de corrélation complète un spectre tel que la pondération en amplitude est inutile, donc de ne pas provoquer de perte du à la pondération dans cette zone. En revanche, dans la zone de corrélation incomplète, cette propriété se perd à mesure que la fraction visible de l'impulsion s'amenuise. Une pondération en amplitude est alors souhaitable.

Dans le cas de l'utilisation d'une impulsion modulée par une rampe de fréquence, la bande d'étalement des fréquences de l'impulsion reconstruite dépend de la longueur de cette impulsion. La résolution spatiale (séparation minimale entre deux points afin que le radar détecte indépendamment ces deux points) dépend de la bande d'étalement des fréquences. Donc plus l'impulsion reconstruite est longue, plus sa bande d'étalement des fréquences utilisée est grande et donc meilleure sa résolution spatiale est. Donc si la bande d'étalement des fréquences de l'impulsion émise est calculée pour que l'impulsion reconstruite la plus courte satisfasse au critère de résolution spatiale, alors dans le cas de l'impulsion reconstruite complète la bande d'étalement des fréquences étant plus grande, la résolution spatiale risque d'être trop précise (deux points que devraient être perçus comme étant conjoints risquent d'être perçus de manière séparée). Le module de corrélation peut donc comporter un dispositif de filtrage. Ce filtrage peut utiliser une formule utilisant une fonction monotone (puissance, Log., etc.) et il a pour but de rendre la résolution en distance identique pour l'ensemble des signaux corrélés avec les impulsions reconstruites. La fonction de filtrage peut être différente sur les différents intervalles débutant à T2(i)+T1+T3(j) et finissant à T2(i)+T1T3(j). Par exemple, si dans une des zones, la résolution est k fois plus élevée que nécéssaire, on va calculer de manière glissante ou

non: $Y_i = \dfrac{1}{\beta} f^{-1}(\sum\limits_{u=-U}^{U} f(a_u X_{i+u}))$. Dans cette équation f est une fonction monotone et les coefficients $a_u$ sont choisis pour obtenir la réponse impulsionnelle recherchée. Il est possible par exemple d'utiliser $a = 1$, $U=k/2$, $f(x)=x^2$ et $\beta=1$.

Dans un mode de réalisation le système permet l'utilisation de plusieurs fréquences afin de réaliser les différents traitements en utilisant la diversité de fréquence pour lisser les fluctuations de cible. De 5 à 15 fréquences d'émission assez espacées suffisent à obtenir l'effet de décorrélation et de diversité en fréquence. Dans ce mode de réalisation le module d'émission et le module de réception sont adaptés pour l'émission et la réception des signaux de manière à utiliser plusieurs fréquences. Il est connu dans l'état de la technique des dispositifs permettant de faire cette émission et cette réception.

L'organisation des différentes fréquences peut être de deux types différents. Dans un premier type les fréquences utilisées par des impulsions successives sont identiques. La fréquence d'émission est modifiée au bout d'un certain nombre d'occurrence des impulsions. Dans un deuxième type la fréquence utilisée par deux impulsions successives est différente et l'utilisation des fréquences suit une loi de répartition pouvant être périodique.

Le premier type d'utilisation des fréquences présente l'avantage de restreindre l'espacement temporel entre les impulsions sommées ensembles, donc d'améliorer la précisions de la localisation des objets évoluant à vitesse non-constante. En revanche, en ayant des séquences de plusieurs impulsions à fréquence constante, il présente certaines faiblesses. En particulier le risque de fausse alarme due à des impulsions réfléchies ambigües de grande surface équivalente radar est augmenté et le système est plus perturbé par des sources de brouillage du fait de l'absence partielle d'agilité de fréquence.

Le deuxième type d'utilisation des fréquences présente l'avantage de limiter le risque de fausse alarme due à des impulsions réfléchies ambigües de grande surface équivalente radar il permet aussi une plus grande robustesse vis-à-vis des sources de brouillage, du fait de l'agilité de fréquence d'impulsion à impulsion. Cependant ce deuxième type d'utilisation des fréquences est moins robuste vis-à-vis des mouvements à vitesse non-constant des cibles.

Dans les deux types d'utilisation des fréquences, le module 103 de détermination d'une corrélation comporte entre outre un dispositif de synchronisation, permettant de synchroniser les impulsions réfléchies correspondant à la même fréquence et d'additionner dans un même signal les échantillons des intervalles temporels du signal reçu correspondant à la réception de ces impulsions réfléchies. Ainsi pour une impulsion émise i utilisant une fréquence d'émission, les impulsions émises j utilisant la même fréquence sont déterminées, puis pour tout ou partie des impulsions émises j les échantillons de l'intervalle dudit signal radar réfléchi débutant à T2(j)+T1 et finissant à T2(j)+2*T1 sont additionnés et stockés dans l'intervalle d'un troisième signal débutant à T2(i)+T1 et finissant à T2(i)+2*T1.

La figure 4 présente le procédé de choix entre la répartition des fréquences suivant le type 1 et la répartition des fréquences suivant le type 2. Ce procédé comporte:

- Une étape 401 de détection d'une éventuelle source de brouillage
- Une étape 402 d'émission et de réception d'un signal radar utilisant pour des impulsions, faisant partie d'un même groupe d'impulsions successives, une fréquence d'émission identique, la fréquence d'émission variant d'un groupe au suivant. Cette étape est utilisée dans le cas de non détection d'une source de brouillage
- Une étape 403 d'émission et de réception d'un signal radar utilisant des fréquences différentes pour deux impulsions successives, les fréquences suivant une loi de répartition périodique ou non périodique. Cette étape est utilisée dans le cas de détection d'une source de brouillage.

**Revendications**

1. Système de localisation radar comprenant :

   - des moyens (101) d'émission de signal radar, ledit signal comprenant au moins une impulsion émise, une impulsion émise ayant une durée T1 et un indice i associé et débutant à un instant T2(i), de plus ladite impulsion étant modulée par au moins un code conservant de bonnes propriétés d'autocorrélation lorsqu'une fraction dudit code est utilisée
   - des moyens (102) de réception de signaux radar réfléchis,
   - des moyens (103) de détermination d'une corrélation entre une reconstruction d'une impulsion émise et le signal radar reçu durant l'intervalle temporel débutant à T2(i)+2*T1 et finissant à T2(i+1) ledit système étant **caractérisé en ce que** lesdits moyens de détermination d'une corrélation sont en outre adaptés pour ;
   - reconstruire un ensemble d'au moins une impulsion tronquée j, une impulsion tronquée j étant de durée T3(j), inférieure à la durée de l'impulsion émise T1 et correspondant à la partie finale de ladite impulsion émise, lesdites impulsions tronquées étant de durées respectives croissantes,
   - déterminer au moins un premier signal corrélé j par corrélation de ladite impulsion tronquée j et du signal reçu durant l'intervalle temporel débutant à T2(i)+T1 et finissant à T2(i)+T1+T3(j)
   - déterminer un deuxième signal, à partir de tout ou partie des premiers signaux corrélés j, par la recopie de l'intervalle temporel, dudit signal corrélé j, débutant à T2(i)+T1+T3(j-1) et finissant à T2(i)+T1 +T3(j), sur l'intervalle temporel, dudit deuxième signal, débutant à T2(i)+T1+T3(j-1) et finissant à T2(i)+T1+T3(j)
   - déterminer la localisation d'objets ayant réfléchi ledit signal radar, par détermination de pics dudit deuxième signal.

2. Système selon la revendication 1 dans lequel lesdits moyens (103) de détermination d'une corrélation sont en outre adaptés pour la multiplication des échantillons temporels desdites impulsions tronquées, par un coefficient de pondération respectif appartenant à une fenêtre de pondération

3. Système selon la revendication 1 ou 2 dans lequel lesdits moyens de détermination d'une corrélation sont en outre adaptés, à partir d'une impulsion reconstruite j, pour ;

   - calculer un premier vecteur correspondant à la transformée de Fourier discrète du signal reçu sur l'intervalle allant de T2(i)+T1 à T2(i)+T1 +T3(j)
   - déterminer un deuxième vecteur correspondant à la transformée de Fourier discrète de la retournée temporelle du conjugué complexe de l'impulsion reconstruite j
   - calculer ledit premier signal corrélé j par transformée de Fourier discrète inverse de la multiplication terme à terme du premier et du deuxième vecteur

4. Système selon l'une des revendications 1 à 3 dans lequel lesdits moyens (101) d'émission sont en outre adaptés pour l'émission de signaux radar comprenant au moins une impulsion modulée en utilisant une rampe de fréquence linéaire ou non linéaire et ledit module réception est adapté pour la réception de signaux radar comportant lesdites impulsions modulées en utilisant une rampe de fréquence linéaire ou non linéaire

5. Système selon la revendication 4 dans lequel lesdits moyens (103) de détermination d'une corrélation sont en outre adaptés, à partir d'une impulsion reconstruite j, pour filtrer les échantillons dudit deuxième signal, sur un intervalle débutant à T2(i)+T1 +T3(j) et finissant à T2(i)+T1+T3(j+1) afin qu'un échantillon dudit intervalle soit égal à la moyenne pondérée des échantillons voisins dudit échantillon

6. Système selon l'une des revendications 1 à 5 dans lequel lesdits moyens (101) d'émission sont adaptés pour utiliser un ensemble de fréquences différentes pour l'émission desdites impulsions desdits signaux radar et lesdits moyens (102) de réception sont adaptés pour recevoir lesdites impulsions desdits signaux radar réfléchis sur lesdites fréquences différentes

7. Système selon la revendication 6 ;

   - comprenant en outre des moyens de détermination d'un troisième signal de synchronisation, pour une impulsion émise i utilisant une fréquence, par l'addition terme à terme, pour tout ou partie des impulsions émises j utilisant la même fréquence, des échantillons de l'intervalle dudit signal radar réfléchi débutant à T2(j)+T1 et finissant à T2(j)+2*T1, ladite addition étant stockée dans l'intervalle temporel, dudit troisième signal, débutant à T2(i)+T1 et finissant à T2(i)+2*T1 ;
   - et dans lequel lesdits moyens (103) de détermination d'une corrélation sont en outre adaptés pour la corrélation entre la reconstruction d'une impulsion émise et l'intervalle temporel, dudit troisième signal, débutant à T2(i)+2*T1 et finissant à T2(i+1)

8. Procédé de localisation radar utilisant le système selon la revendication 7 comportant les étapes suivantes :

   - une étape (401) de détection d'une éventuelle source de brouillage
   - une étape (402), dans le cas de non détection d'une source de brouillage, d'émission et de réception d'un signal radar pour lequel les impulsions faisant partie d'un même groupe d'impulsions successives utilisent une fréquences d'émission identique, la fréquence d'émission variant d'un groupe au suivant
   - une étape (403), dans le cas de détection d'une source de brouillage, d'émission et de réception d'un signal radar utilisant des fréquences différentes pour deux impulsions successives, les fréquences suivant une loi de répartition périodique ou non périodique

**Patentansprüche**

1. Radarortungssystem, das Folgendes umfasst:

   - Mittel (101) zum Senden eines Radarsignals, wobei das Signal wenigstens einen emittierten Impuls umfasst, wobei ein emittierter Impuls eine Dauer T1 und einen Index i in Assoziation mit und beginnend an einem Zeitpunkt T2(i) hat, wobei der Impuls auch durch wenigstens einen Code moduliert wird, der gute Autokorrelationseigenschaften beibehält, wenn eine Fraktion des Codes benutzt wird;
   - Mittel (102) zum Empfangen von reflektierten Radarsignalen;
   - Mittel (103) zum Ermitteln einer Korrelation zwischen einer Rekonstruktion eines emittierten Impulses und dem während des Zeitintervalls beginnend bei T2(i)+2*T1 und endend bei T2(i+1) empfangenen Radarsignal,

wobei das System **dadurch gekennzeichnet ist, dass** die Mittel zum Ermitteln einer Korrelation auch ausgelegt sind zum:

   - Rekonstruieren eines Satzes von wenigstens einem abgekürzten Impuls j, wobei ein abgekürzter Impuls j eine Dauer T3(j) hat, die kürzer ist als die Dauer T1 des emittierten Impulses und dem letzten Teil des emittierten Impulses entspricht, wobei die verkürzten Impulse jeweils zunehmende Dauern haben;
   - Ermitteln wenigstens eines ersten korrelierten Signals j durch Korrelieren des verkürzten Impulses j und des Signals, das während des Zeitintervalls beginnend bei T2(i)+T1 und endend bei T2(i)+T1+T3(j) empfangen wird;
   - Ermitteln eines zweiten Signals auf der Basis von einigen oder allen der ersten korrelierten Signale j, durch Kopieren des Zeitintervalls des korrelierten Signals j, beginnend bei T2(i)+T1+T3(j-1) und endend bei T2(i)+T1+T3(j), auf das Zeitintervall des zweiten Signals beginnend bei T2(i)+T1+T3(j-1) und endend bei T2(i)+T1+T3(j);
   - Ermitteln des Orts von Objekten, die das Radarsignal reflektiert haben, durch Ermitteln von Peaks des zweiten Signals.

2. System nach Anspruch 1, wobei die Mittel (103) zum Ermitteln einer Korrelation ferner zum Multiplizieren von Zeit-Samples der verkürzten Impulse mit einem jeweiligen Gewichtungskoeffizienten ausgelegt sind, der zu einem Gewichtungsfenster gehört.

3. System nach Anspruch 1 oder 2, wobei die Mittel zum Ermitteln einer Korrelation auch, auf der Basis eines rekonstruierten Impulses j, ausgelegt sind zum:

   - Berechnen eines ersten Vektors entsprechend der diskreten Fourier-Transformation des Signals, das im Intervall von T2(i)+T1 bis T2(i)+T1+T3(j) empfangen wurde;
- Ermitteln eines zweiten Vektors entsprechend der diskreten Fourier-Transformation der zeitlichen Rücksendung des komplexen Konjugats des rekonstruierten Impulses j;
- Berechnen des ersten korrelierten Signals j durch die umgekehrte diskrete Fourier-Transformation der Term-mal-Term-Multiplikation des ersten und zweiten Vektors.

4. System nach einem der Ansprüche 1 bis 3, wobei die Sendemittel (101) ferner zum Senden von Radarsignalen ausgelegt sind, die wenigstens einen Impuls umfassen, der mit einer linearen oder nichtlinearen Frequenzrampe moduliert wurde, und das Empfangsmodul zum Empfangen von Radarsignalen ausgelegt ist, die die mit einer linearen oder nichtlinearen Frequenzrampe modulierten Impulse umfassen.

5. System nach Anspruch 4, wobei die Mittel (103) zum Ermitteln einer Korrelation ferner, auf der Basis eines rekonstruierten Impulses j, zum Filtern der Samples des zweiten Signals in einem Intervall beginnend bei T2(i)+T1+T3(j) und endend bei T2(i)+T1+T3(j+1) ausgelegt ist, so dass ein Sample des Intervalls gleich dem gewichteten Durchschnitt der dem Sample benachbarten Samples ist.

6. System nach einem der Ansprüche 1 bis 5, wobei die Sendemittel (101) zur Verwendung eines Satzes von unterschiedlichen Frequenzen zum Emittieren der Impulse der Radarsignale ausgelegt ist, und die Empfangsmittel (102) zum Empfangen der Impulse der auf den unterschiedlichen Frequenzen reflektierten Radarsignale ausgelegt sind.

7. System nach Anspruch 6,

- das ferner Mittel zum Ermitteln eines dritten Synchronisationssignals für einen mit einer Frequenz emittierten Impuls i durch eine Term-zu-Term-Addition, für einige oder alle emittierten Impulse j mit derselben Frequenz, der Samples des Intervalls des reflektierten Radarsignals beginnend bei T2(j)+T1 und endend bei T2(j)+2*T1 umfasst, wobei die Addition in dem Zeitintervall des dritten Signals beginnend bei T2(i)+T1 und endend bei T2(i)+2*T1 gespeichert wird;
- und wobei die Mittel (103) zum Ermitteln einer Korrelation ferner zum Korrelieren zwischen der Rekonstruktion eines emittierten Impulses und dem Zeitintervall des dritten Signals beginnend bei T2(i)+2*T1 und endend bei T2(i+1) ausgelegt ist.

8. Radarortungsverfahren unter Verwendung des Systems nach Anspruch 7, das die folgenden Schritte beinhaltet:

- einen Schritt (401) zum Erkennen einer eventuellen Störquelle;
- einen Schritt (402), falls keine Störquelle erkannt wird, des Sendens und Empfangens eines Radarsignals, dessen Impulse, die zur selben Gruppe von aufeinander folgenden Impulsen gehören, eine identische Sendefrequenz benutzen, wobei die Sendefrequenz von einer Gruppe zur nächsten variiert;
- einen Schritt (403), falls eine Störquelle erkannt wird, des Sendens und Empfangens eines Radarsignals mit unterschiedlichen Frequenzen für zwei aufeinander folgende Impulse, wobei die Frequenzen einem periodischen oder nichtperiodischen Verteilungsgesetz folgen.

**Claims**

1. A radar location system comprising:

- means (101) for transmitting a radar signal, said signal comprising at least one emitted pulse, an emitted pulse having a duration T1 and an associated index i and starting at an instant T2(i), said pulse also being modulated by at least one code retaining good autocorrelation properties when a fraction of said code is used;
- means (102) for receiving reflected radar signals;
- means (103) for determining a correlation between a reconstruction of an emitted pulse and the radar signal received during the time interval starting at T2(i)+2*T1 and finishing at T2(i+1),

said system being **characterised in that** said means for determining a correlation are also adapted for:

- reconstructing a set of at least one truncated pulse j, a truncated pulse j having a duration T3(j) that is shorter than the duration T1 of said emitted pulse and corresponds to the final part of said emitted pulse, said truncated pulses having increasing respective durations;
- determining at least one first correlated signal j by correlating said truncated pulse j and the signal received during the time interval starting at T2(i)+T1 and finishing at T2(i)+T1+T3(j);
- determining a second signal, on the basis of all or part of said first correlated signals j, by copying the time interval of said correlated signal j, starting at T2(i)+T1+T3(j-1) and finishing at T2(i)+T1+T3(j), onto the time interval of said second signal, starting at T2(i)+T1+T3(j-1) and finishing at T2(i)+T1+T3(j);
- determining the location of objects that have reflected said radar signal by determining peaks of said second signal.

2. The system according to claim 1, wherein said means (103) for determining a correlation are further adapted for multiplying time samples of said truncated pulses using a respective weighting coefficient belonging to a weighting window.

3. The system according to claim 1 or 2, wherein said means for determining a correlation are also adapted, on the basis of a reconstructed pulse j, for:

- computing a first vector corresponding to the discrete Fourier transform of the signal received on the interval ranging from T2(i)+T1 to T2(i)+T1+T3(j);
- determining a second vector corresponding to the discrete Fourier transform of the temporal feedback of the complex conjugate of said reconstructed pulse j;
- computing said first correlated signal j by the reverse discrete Fourier transform of the term-to-term multiplication of said first and second vectors.

4. The system according to any one of claims 1 to 3, wherein said transmission means (101) are further adapted for transmitting radar signals comprising at least one pulse modulated using a linear or non-linear frequency ramp and said reception module is adapted for receiving radar signals comprising said modulated pulses using a linear or non-linear frequency ramp.

5. The system according to claim 4, wherein said means (103) for determining a correlation are further adapted, on the basis of a reconstructed pulse j, for filtering the samples of said second signal on an interval starting at T2(i)+T1+T3(j) and finishing at T2(i)+T1+T3(j+1), so that a sample of said interval is equal to the weighted average of the samples neighbouring said sample.

6. The system according to any one of claims 1 to 5, wherein said transmission means (101) are adapted for using a set of different frequencies for emitting said pulses of said radar signals and said reception means (102) are adapted for receiving said pulses of said radar signals reflected on said different frequencies.

7. The system according to claim 6,

- further comprising means for determining a third synchronisation signal, for a pulse i emitted using a frequency, by term-to-term addition, for all or part of the pulses emitted j using the same frequency, of the samples of the interval of said reflected radar signal starting at T2(j)+T1 and finishing at T2(j)+2*T1, said addition being stored in the time interval of said third signal starting at T2(i)+T1 and finishing at T2(i)+2*T1;
- and wherein said means (103) for determining a correlation are further adapted for correlating between the reconstruction of an emitted pulse and the time interval of said third signal starting at T2(i)+2*T1 and finishing at T2(i+1).

8. A radar location method using the system according to claim 7, comprising the following steps:

- a step (401) of detecting a possible jamming source;
- a step (402), when a jamming source is not detected, of transmitting and receiving a radar signal, the pulses of which that belong to the same group of successive pulses use an identical transmission frequency, the transmission frequency varying from one group to the next;
- a step (403), when a jamming source is detected, of transmitting and receiving a radar signal using different frequencies for two successive pulses, the frequencies following a periodic or non-periodic distribution rule.

101

Emission
signaux radars

102

Réception
signaux radars

103

Détermination
d 'une corrélation

# FIG.1

103

301

Construction
impulsion

302

Corrélation
impulsion

303

Concténation
impulsion

# FIG.2

402

Utilisation des
fréquences
de façon
successive

non

401

Détection de
brouillage ?

oui

403

Utilisation des
fréquences
de façon
entrelacée

# FIG.4

T2(i)+T1    T2(i)+T1+T3(1)

Signal corrélé 1

T2(i)+T1+T3(1)

T2(i)+T1+T3(2)

Signal corrélé 2

. . . . . . . . . . . . . . . . .

T2(i)+2*T1

. . . . . . . .

Deuxième signal

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2146105